# EUROPÄISCHE PATENTANMELDUNG

(11) **EP 4 530 493 A1**
(43) Veröffentlichungstag der Anmeldung: **02.04.2025**
(21) Anmeldenummer: 23200531.4
(22) Anmeldetag: 28.09.2023
(51) Int. Cl.: F16F 1/38, F16F 1/37

(54) **BEFESTIGUNGSSYSTEM ZUR VIBRATIONSGEDÄMPFTEN BEFESTIGUNG ZWEIER BAUTEILE SOWIE DARAUS AUFGEBAUTE BAUGRUPPE**

(71) Anmelder: Hutchinson Stop-Choc GmbH & Co.KG, 71272 Renningen (DE)
(72) Erfinder: Wendel, Björn, 71229 Leonberg (DE)
(74) Vertreter: Ostertag & Partner Patentanwälte mbB

(57) **Zusammenfassung**

Eine Baugruppe umfasst ein erstes Bauteil (12) und ein zweites Bauteil (14), an der das erste Bauteil (12) vibrationsgedämpft befestigt ist. Das erste Bauteil (12) weist eine Öffnung (16) mit einer unrunden Innenkontur (18) auf. In die Öffnung (16) ist eine verformbare und als Dämpfer wirkende Hülse (20a, 20b) eingesetzt, die aus einem dreidimensionalen Gefüge aus Fäden, Fasern, Drähten oder anderen eindimensionalen Elementen oder aus einem gesinterten offenporigen Metallschaum besteht, wodurch die Hülse chemisch und mechanisch sehr robust ist. Die Hülse (20a, 20b) hat eine unrunde Innenkontur (24) sowie eine Außenkontur (22), die der Innenkontur (18) der Öffnung (16) entspricht. In die Hülse (20a, 20b) ist eine nicht verformbare Buchse (26) eingesetzt, die eine Außenkontur (28) hat, die der Innenkontur (24) der Hülse (20a, 20b) entspricht. Die Buchse (26) hat außerdem eine mit einem Innengewinde (30) versehene Bohrung (32) zur Aufnahme einer Schraube (34), mittels derer das zweite Bauteil (14) mit dem ersten Bauteil (12) verbindbar ist. Aufgrund der unrunden Konturen können beim Verschrauben wirkende Drehmomente von der Buchse (26) formschlüssig über die Hülse (20a, 20b) auf das erste Bauteil (12) übertragen werden.

## Beschreibung

### HINTERGRUND DER ERFINDUNG

### 1. Gebiet der Erfindung

Die Erfindung betrifft ein Befestigungssystem zur vibrationsgedämpften Verbindung zweier Bauteile sowie eine aus den Bauteilen und dem Befestigungssystem aufgebaute Baugruppe. Bei den Bauteilen kann es sich zum Beispiel um einen Motor und einen Rahmen, ein Gehäuse oder eine sonstige Tragstruktur handeln, an dem der Motor befestigt werden soll. Ein typischer Anwendungsfall ist die Befestigung eines Elektromotors an einem Rahmen eines E-Bikes.

### 2. Beschreibung des Standes der Technik

Werden oszillierende Bauteile wie z.B. Elektro- oder Verbrennungsmotoren an Tragstrukturen festgeschraubt, können sich die Schwingungen dieser Bauteile auf die Tragstrukturen übertragen. Dies geht im Allgemeinen mit einer erhöhten Geräuschentwicklung einher. Die in die Tragstruktur eingebrachten Schwingungen können in der Tragstruktur Schäden hervorrufen und/oder den Komfort beeinträchtigen. Wird beispielsweise der Elektromotor eines E-Bikes direkt mit dem Fahrradrahmen verschraubt, so verstärkt der Fahrradrahmen die vom Elektromotor erzeugten Geräusche. Außerdem können die auf den Fahrradrahmen übertragenen Vibrationen zu einem unangenehmen Kribbeln in den Händen des Fahrers und zu einem frühzeitigen Lösen von Schraubverbindungen führen.

Um die Übertragung der Schwingungen des Elektromotors auf den Fahrradrahmen zu verhindern, werden vereinzelt Gummielemente oder andere Elastomere eingesetzt, die eine gewisse Vibrationsdämpfung bewirken. Diese Materialien sind jedoch chemisch nicht sehr widerstandfähig, weswegen sie unter dem Einfluss von Öl, Lösungsmitteln und Sonnenlicht rasch spröde werden. Nachteilig ist außerdem die geringe mechanische Beständigkeit dieser Materialien, d.h. die Elastizität lässt bei langandauernder Belastung spürbar nach. Die rasche Alterung dieser Materialien führt dazu, dass die Dämpfungswirkung zu schnell nachlässt.

Ähnliche Probleme stellen sich auch bei anderen Anwendungen, z.B. bei der Befestigung von Verbrennungsmotoren an Motorradrahmen oder von Motoren an Gehäusen von Rasenmähern.

### ZUSAMMENFASSUNG DER ERFINDUNG

Aufgabe der Erfindung ist es, ein Befestigungssystem zur vibrationsgedämpften Verbindung zweier Bauteile anzugeben, das robust und langlebig ist. Außerdem ist es Aufgabe der Erfindung, eine Baugruppe anzugeben, die aus den Bauteilen und dem Befestigungssystem aufgebaut ist.

Gelöst wird diese Aufgabe hinsichtlich der Baugruppe durch eine Baugruppe, die ein erstes Bauteil und ein zweites Bauteil umfasst, an der das erste Bauteil vibrationsgedämpft befestigt ist. Das erste Bauteil weist eine Öffnung mit einer unrunden Innenkontur auf. In die Öffnung ist eine verformbare und als Dämpfer wirkende Hülse eingesetzt, die aus einem dreidimensionalen Gefüge aus Fäden, Fasern, Drähten oder anderen eindimensionalen Elementen oder aus einem gesinterten offenporigen Metallschaum besteht. Die Hülse hat eine Außenkontur, die der Innenkontur der Öffnung entspricht, und eine unrunde Innenkontur. In die Hülse ist eine nicht verformbare Buchse eingesetzt, die eine Außenkontur hat, die der Innenkontur der Hülse entspricht. Ferner hat die Buchse eine mit einem Innengewinde versehene Bohrung zur Aufnahme einer Schraube, mittels derer das zweite Bauteil mit dem ersten Bauteil verbindbar ist.

Erfindungsgemäß wird die zu einer Dämpfung führende Entkopplung der beiden Bauteile durch eine Hülse bewirkt, die aus einem dreidimensionalen Gefüge aus Fäden, Fasern, Drähten oder anderen eindimensionalen Elementen oder aus einem gesinterten offenporigen Metallschaum besteht. Das Gefüge kann insbesondere ein Gewirk, ein Gestrick, ein Gewebe oder ein Filz sein. Als Material sind Drähte bevorzugt, die gut zu dreidimensionalen Gebilden gewirkt oder gestrickt werden können, wobei wegen seiner Korrosionsbeständigkeit vor allem Edelstahl als Material in Betracht kommt. Anstelle von Drähten kann das Gefüge aus chemisch widerstandsfähigen Fasern wie z.B. p-Aramiden (Handelsname *Kevlar*) bestehen. Die Drähte oder Fasern können glatt sein oder eine wellenförmige Struktur haben. Insbesondere kann das Gefüge aus Welldrähten bestehen, die nicht gestrickt oder gewebt, sondern aufgewickelt oder gefaltet und anschließend verpresst sind.

Ein solches Gefüge ist meist hartelastisch und hat daher sehr gute Dämpfungseigenschaften. Ferner ist es sowohl chemisch als auch mechanisch sehr robust und zeigt kaum Alterungserscheinungen. Schwingungen, die von dem einen Bauteil erzeugt werden, werden nicht oder nur zu einem geringen Teil auf das andere Bauteil übertragen; außerdem wird ein Teil der Schwingungsenergie in dem Gefüge in Wärme umgewandelt.

Ähnlich günstige Eigenschaften haben gesinterte offenporige Metallschäume. Sie sind ebenfalls chemisch und mechanisch robust, meist aber weniger elastisch als Gefüge. Bei bestimmten Schwingungsfrequenzen und -amplituden können solche Metallschäume aber Eigenschaften aufweisen, die denen von Gefügen überlegen sind.

Aufgrund der unrunden Innen- und Außenkonturen können Drehmomente von der Buchse, an der die Schraube angreift, formschlüssig über die Hülse auf das erste Bauteil übertragen werden. Als Kontur wird dabei eine Umfangslinie der betreffenden Innen- oder Außenfläche bezeichnet. Unrund bedeutet dabei jede Abweichung von der perfekten Rotationssymmetrie. Wären die Außen- bzw. Innenflächen der Buchse, Hülse und Öffnung beispielsweise kreiszylindrisch oder kreiskegelförmig, würden sich beim Anziehen der Schraube die Buchse in der Hülse und/oder die Hülse in der Öffnung mitdrehen, so dass die beiden Bauteile nicht fest miteinander verbunden werden könnten.

Besonders leicht herstellbar sind stadionförmige Konturen, wie man sie bei Langlöchern findet. Es kommen aber auch ovale (insbesondere elliptische), (abgerundet) quadratische oder rechteckige, dreieckige oder sternförmige Konturen in Betracht. Ein Formschluss zum Zwecke des Drehmomentübertrags kann aber auch durch niedrigsymmetrische Strukturen bewirkt werden. So genügt bereits ein einzelner Vorsprung, der in eine entsprechende Ausnehmung eingreift, oder eine einzige Längsrippe, die in eine entsprechende Längsnut eingreift, um einen Formschluss zu bewirken.

Normalerweise wird der unrunde Querschnitt in Längsrichtung der Öffnung/Hülse/Buchse konstant sein. Grundsätzlich kommen aber auch sich verjüngende oder erweiternde Querschnitte in Betracht.

Bei dem zweiten Bauteil kann es sich um eine Tragstruktur für das erste Bauteil handeln, das vibriert und z.B. ein Elektromotor oder ein Verbrennungsmotor sein kann. In E-Bikes werden die Elektromotoren mit dem Fahrradrahmen verschraubt, wobei die Schrauben entlang der sog. y-Richtung, also parallel zur Hinterachse des Fahrrads, verlaufen. In diesem Anwendungsfall sollten die Öffnungen im Gehäuse des Elektromotors zur Aufnahme der Hülse ebenfalls parallel zur Hinterachse des Fahrrads ausgerichtet sein.

Die Öffnung im ersten Bauteil kann eine Sacköffnung oder eine Durchgangsöffnung sein. Wenn in der Art eines Festlagers eine axiale Beweglichkeit ausgeschlossen sein soll, sollte die Öffnung eine Durchgangsöffnung sein, da man dann die Hülse formschlüssig an der Öffnung festlegen kann, ohne dass zusätzliche Bauteile zur axialen Fixierung benötigt werden.

Die Bohrung für die Aufnahme der Schraube kann ebenfalls als Sackbohrung oder Durchgangsbohrung ausgebildet sein. Eine Durchgangsbohrung verringert das Gewicht und lässt sich leichter von Bearbeitungsspänen befreien. Wenn das Innengewinde sich über die gesamte Durchgangsbohrung hindurch erstreckt, lässt sich die Schraube von beiden Seiten her einschrauben, was die Variabilität bezüglich der möglichen Einbausituationen erhöht.

Bei einem Ausführungsbeispiel ist die Innenkontur der Hülse geometrisch ähnlich zur Außenkontur der Hülse, die der Innenkontur der Öffnung entspricht. Geometrisch ähnlich bedeutet anschaulich gesprochen, dass sich die Konturen nur durch den Maßstab voneinander unterscheiden und zudem zueinander verdreht angeordnet sein können. Fehlt es an einer solchen Verdrehung, führt das Erfordernis der geometrischen Ähnlichkeit zu einer konstanten Wandstärke der Hülse und damit zu einem Dämpfungsverhalten, dass senkrecht zur Längsrichtung der Hülse isotrop ist, wie dies bei vielen Anwendungen erwünscht ist.

Wenn die Hülse hingegen eine Wandstärke hat, die über den Umfang der Hülse variiert, so kann gezielt ein anisotropes Dämpfungsverhalten eingestellt werden. Entlang einer Richtung, in der die Wandstärke am größten ist, ist dann die Dämpfungswirkung am stärksten.

Um die Hülse verliersicher in der Öffnung befestigen zu können, kann zur Erzielung einer Übergangs- oder Presspassung die Außenkontur der Hülse größer ist als die Innenkontur der Öffnung sein.

Entsprechendes gilt für die Buchse. Um diese verliersicher in der Hülse befestigen zu können, kann zur Erzielung einer Übergangs- oder Presspassung die Außenkontur der Buchse größer als die Innenkontur der Hülse sein.

Bei einem Ausführungsbeispiel verläuft eine Längsachse der Bohrung parallel versetzt zu einer Längsachse der Hülse. Eine solche exzentrische Anordnung wirkt sich nicht auf die Übertragung der Kräfte und Drehmomente aus, erleichtert aber in vielen Anwendungsfällen das Anbringen der Schraube.

Die Buchse kann stirnseitig einen umlaufenden Kragen aufweisen, der an der Hülse anliegt und die axiale Lage der Buchse in der Hülse festlegt. Der Kragen kann dabei durchgehend oder als (ggf. auch mehrfach) durchbrochene Struktur ausgebildet sein.

Wenn die Öffnung eine Durchgangsöffnung ist und einen nach innen ragenden Vorsprung aufweist, wobei die Hülse zwischen dem Vorsprung und dem Kragen angeordnet ist, so wird die Buchse durch das Anziehen der Schraube in der Art eines Festlagers in beiden Richtungen axial festlegt. Der Anschlag kann z.B. ein umlaufender Vorsprung sein, der sich von der Innenkontur der Öffnung abhebt.

Fehlt in der Öffnung ein Vorsprung, an dem die Hülse sich abstützen kann, bewirkt der Kragen lediglich eine axiale Festlegung entlang einer Richtung, wie dies für ein Loslager typisch ist.

Wenn das erste Bauteil mit einem Festlager und mit einem Loslager an dem zweiten Bauteil befestigt wird, übernimmt das Festlager die gewünschte beidseitige axiale Fixierung.

Das Loslager erlaubt es, Fertigungstoleranzen auszugleichen, wie sie z.B. bei Fahrradrahmen typischerweise auftreten.

Der Kragen kann sich auf einer Stirnseite der Buchse befinden, von der aus die Schraube in die Bohrung eingeschraubt wird. Bevorzugt befindet sich der Kragen jedoch auf der gegenüberliegenden Stirnseite der Buchse, da sich nur dann ein Festlager realisieren lässt. Bei einer solchen Anordnung des Kragens kann die gleiche Buchse sowohl für ein Festlager als auch für ein Loslager verwendet werden, was kostengünstiger ist und die Bevorratung vereinfacht.

Bei einem Ausführungsbeispiel hat die Hülse einen flanschartigen Ansatz, der an einer die Öffnung umgebende Stirnfläche des ersten Bauteils in Anlage kommt. Der Flansch ermöglicht es, die Dämpfungswirkung in axialer Richtung genauer an die Erfordernisse anzupassen. Außerdem verringert der Flansch die Flächenpressung und verhindert somit, dass es bei sehr hohen Kräften zu Fehlfunktionen kommt.

Wenn das Gefüge und das erste Bauteil aus unterschiedlichen Metallen bestehen, kann zur Vermeidung von Kontakterosion zwischen den Metallen eine Schutzhülse aus einem passivierten Metall zwischen der Hülse und dem ersten Bauteil angeordnet sein. Die Schutzhülse verhindert einen direkten Kontakt zwischen den Metallen und erhöht außerdem die Druckstabilität. Alternativ dazu kann die Hülse selbst aus einem passivierten Material hergestellt werden.

Die Schutzhülse kann einen radial nach innen weisenden Kragen haben, der zwischen der Hülse und dem nach innen ragenden Vorsprung liegt, der an der Öffnung ausgebildet ist, wobei der Kragen hat eine größere Kontaktfläche zu der Hülse hat als der Vorsprung. Auf diese Weise kann die Flächenpressung der Hülse gegen den Vorsprung in axialer Richtung verringert werden.

Es hat sich überraschenderweise gezeigt, dass beim Betätigen der Pedale eines E-Bikes auf die Befestigungen des Motors am Rahmen Kräfte wirken, die entlang der Längsrichtung der Hülse, d.h. parallel zur y-Richtung des E-Bikes, variieren. Wenn die Hülse aus einem verpressten Welldraht besteht, dessen Dichte entlang der Längsrichtung variiert, kann solchen unterschiedlichen Belastungen Rechnung getragen werden. In Abschnitten, in denen die Kräfte größer sind, wird die Dichte des Welldrahts und damit die Härte und Widerstandsfähigkeit der Hülse lokal erhöht. Mit einem Welldraht als Material für die Hülse lässt sich auch die Härte eines an der Hülse ausgebildeten Kragens besser einstellen, als dies bei Gestricken möglich ist.

Hinsichtlich des Befestigungssystems wird die eingangs genannte Aufgabe gelöst durch ein Befestigungssystem zur vibrationsgedämpften Verbindung eines ersten Bauteils und eines zweiten Bauteils. Das Befestigungssystem umfasst eine verformbare und als Dämpfer wirkende Hülse, die aus einem dreidimensionalen Gefüge aus Fäden, Fasern, Drähten oder anderen eindimensionalen Elementen oder aus einem gesinterten offenporigen Metallschaum besteht, eine unrunde Außenkontur und eine unrunde Innenkontur hat und formschlüssig in eine Öffnung mit unrunder Innenkontur einschiebbar ist, die in dem ersten Bauteil vorgesehen ist. Das Befestigungssystem weist ferner eine nicht verformbare Buchse auf, die eine Außenkontur hat, die der Innenkontur der Hülse entspricht, so dass die Buchse in die Hülse einschiebbar ist, und eine mit einem Innengewinde versehene Bohrung zur Aufnahme einer Schraube hat, mittels derer das zweite Bauteil mit dem ersten Bauteil verbindbar ist.

Die zur Baugruppe erläuterten vorteilhaften Wirkungen und Ausgestaltungen gelten für das Befestigungssystem entsprechend.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: ein erfindungsgemäßes Befestigungssystem gemäß einem ersten Ausführungsbeispiel in einem Querschnitt;
- Figur 2: das Befestigungssystem der Figur 1 in einem Längsschnitt entlang der Linie II-II;
- Figur 3: einen Längsschnitt durch ein erfindungsgemäßes Befestigungssystem gemäß einem zweiten Ausführungsbeispiel, bei dem das zweite Bauteil in der Art eines Loslagers nur einseitig axial fixiert ist;
- Figuren 4a bis 4c: Ausführungsbeispiele für mögliche Konturen der Hülse des Befestigungssystems;
- Figur 5: eine perspektivische Darstellung des ersten Bauteils mit darin aufgenommenem Befestigungssystem in den Varianten Loslager (vorne) bzw. Festlager (hinten);
- Figur 6: ein erfindungsgemäßes Befestigungssystem gemäß einem dritten Ausführungsbeispiel in einem Querschnitt wie in Figur 1;
- Figur 7: eine Schutzhülse des in der Figur 6 gezeigten Befestigungssystem in einer perspektivischen Darstellung;
- Figur 8: einen Längsschnitt durch ein Anwendungsbeispiel, bei dem zwei Bauteile mit einem Festlager und einem Loslager miteinander verbunden sind, wobei in beiden Lagern die gleichen Buchsen verwendet werden;
- Figur 9: eine Variante einer Buchse, die eine Durchgangsgewindebohrung hat;
- Figur 10: ein Ausführungsbeispiel eines Festlagers, bei dem die Hülsen jeweils mit einem Flansch versehen sind, und
- Figur 11: ein Ausführungsbeispiel eines Festlagers, bei dem die Hülsen sich in axialer Richtung nicht an einem Vorsprung in der Öffnung abstützen.

### BESCHREIBUNG BEVORZUGTER AUSFÜHRUNGSBEISPIELE

### 1. Erstes Ausführungsbeispiel

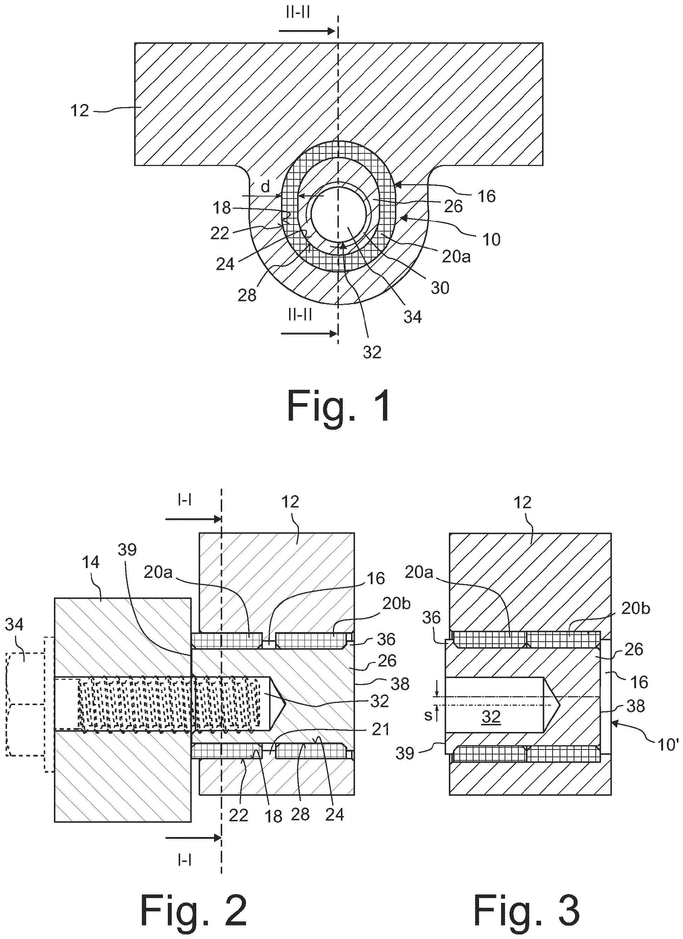

Die Figuren 1 und 2 zeigen ein erfindungsgemäßes und insgesamt mit 10 bezeichnetes Befestigungssystem in einem Querschnitt gemäß der Linie II-II bzw. in einem Längsschnitt entlang der Linie I-I. Das Befestigungssystem 10 dient dazu, ein erstes Bauteil 12 mit einem zweiten Bauteil 14 (nur in der Figur 2 gezeigt) zu verbinden. Das erste Bauteil 12 kann beispielsweise ein Gehäuse eines Elektromotors und das zweite Bauteil ein Fahrradrahmen sein, der das Gehäuse trägt.

Das erste Bauteil 12 weist eine Öffnung 16 auf, die als Durchgangsöffnung ausgebildet ist, in anderen Ausführungsbeispielen jedoch auch als Sacköffnung ausgebildet sein kann. Die Innenkontur 18 der Öffnung 16 hat die Form eines Stadions und ist somit unrund.

In die Öffnung 16 sind zwei verformbare und als Dämpfer wirkende Hülsen 20a, 20b eingesetzt, die im dargestellten Ausführungsbeispiel jeweils als Edelstahldraht-Gestrick ausgebildet sind. Wie in der Figur 2 erkennbar ist, sind die beiden Hülsen 20a, 20b von gegenüberliegenden Seiten in die Öffnung 16 eingeführt, bis sie an einen umlaufenden Vorsprung 21 in Anlage gelangen, der ungefähr auf halber axialer Länge der Öffnung 16 ausgebildet ist. Die radiale Höhe des Vorsprungs 21 ist dabei deutlich geringer als die Wandstärke der beiden Hülsen 20a, 20b.

Die Außenkontur 22 der Hülsen 20a, 20b entspricht der Innenkontur 18 der Öffnung 16 und ist daher ebenfalls stadionförmig.

Im dargestellten Ausführungsbeispiel ist die Innenkontur 24 der Hülsen 20a, 20b ebenfalls stadionförmig und unterscheidet sich nur durch die Größe von der Außenkontur 22. Die Innen- und Außenkonturen der Hülsen 20a, 20b sind konzentrisch, sodass die Hülsen 20a, 20b jeweils eine konstante Wandstärke d haben, wie dies in der Figur 1 gut erkennbar ist. In die Hülsen 20a, 20b ist eine nicht verformbare Buchse 26 eingesetzt, deren Außenkontur 28 der Innenkontur 24 der Hülsen 20a, 20b entspricht. Die Buchse 26, die beispielsweise aus Edelstahl gefertigt sein kann, hat eine mit einem Innengewinde 30 versehene Sackbohrung 32, die zur Aufnahme einer in der Figur 2 gestrichelt angedeuteten Schraube 34 vorgesehen ist. Durch Anziehen der Schraube 34 wird das zweite Bauteil 14 mit dem ersten Bauteil 12 drehfest verbunden. An der Buchse ist auf der Seite, die der Sackbohrung gegenüber liegt, ein umlaufender Kragen 36 ausgebildet, der als Anschlag dient.

Wenn die Sackbohrung 32 durch eine Durchgangsbohrung ersetzt wird, lässt sich das Gewicht der Buchse 26 verringern. Je nach den auftretenden Kräften kann es jedoch aus Gründen der Stabilität zweckmäßig sein, die Buchse 26 nicht durch eine Durchgangsbohrung zu schwächen.

Sowohl im Ausführungsbeispiel der Figuren 1 und 2 als auch im Ausführungsbeispiel der Figur 3 verläuft die Längsachse der Sackbohrung 32 nicht konzentrisch zur Längsachse der Buchse 26, sondern ist parallel versetzt dazu angeordnet. In der Figur 3 ist dieser Versatz mit s bezeichnet. Bei einigen Anwendungen ist die Schraube 34 infolge des Versatzes besser zugänglich.

Bei der Montage werden zunächst die beiden Hülsen 20a, 20b von gegenüberliegenden Seiten in die Öffnung 16 eingeschoben oder eingeschlagen, bis sie an dem umlaufenden Vorsprung 21 anschlagen. Vorzugsweise ist die Außenkontur 22 der Hülsen 20a, 20b etwas größer als die Innenkontur 18 der Öffnung 16, sodass die Hülsen 20a, 20b infolge einer Übergangs- oder Presspassung verliersicher in der Öffnung 16 gehalten werden. Je nach den elastischen Eigenschaften der Hülsen 20a, 20b kann das Einschieben auch werkzeugfrei erfolgen.

Anschließend wird von der Seite des ersten Bauteils 12, die dem zweiten Bauteil 14 abgewandt ist, die Buchse 26 in die beiden Hülsen 20a, 20b eingeschoben. Der umlaufende Kragen 36 der Buchse 26 kommt dabei in Anlage mit der nach außen weisenden Stirnfläche der zweiten Hülse 20b. Dadurch ist die Buchse 26 axial in einer Richtung festgelegt. Vorzugsweise ist die Außenkontur 28 der Buchse 26 etwas größer als die Innenkontur 24 der Hülsen 20a, 20b, sodass die Buchse 26 infolge einer Übergangs- oder Presspassung verliersicher in den Hülsen 20a, 20b gehalten werden.

In einem nächsten Schritt wird mit Hilfe der Schraube 34 das zweite Bauteil 14 mit der Buchse 26 verschraubt, bis das zweite Bauteil 14 an der Buchse 26 anschlägt. Aufgrund der unrunden Konturen der Öffnung 16, der Hülsen 20a, 20b und der Buchse 26 bildet das Befestigungssystem 10 eine formschlüssige Anordnung, die sich beim Anziehen der Schraube 34 nicht mitdreht.

Die erste Hülse 20a, die sich am umlaufenden Vorsprung 21 abstützt, definiert die axiale Position in der anderen Richtung. Das zweite Bauteil 14 ist auf diese Weise gegenüber dem ersten Bauteil 12 in der Art eines Festlagers axial in engen Grenzen festgelegt, wobei die Grenzen durch die axiale Elastizität der beiden Hülsen 20a, 20b vorgegeben sind.

Wenn das erste Bauteil 12 beispielsweise das Gehäuse eines Motors ist, so werden Schwingungen des ersten Bauteils 12 aufgrund der Hülsen 20a, 20b nur gedämpft auf das zweite Bauteil 14 übertragen. Dies gilt sowohl für Schwingungen in axialer als auch in radialer Richtung. Durch das Anziehen der Schraube 34 werden beide Hülsen 20a, 20b axial leicht komprimiert, was deren Dämpfungseigenschaften verbessert.

### 2. Zweites Ausführungsbeispiel

In manchen Fällen ist eine axiale Festlegung nur entlang einer Richtung gewünscht, um beispielsweise Fertigungstoleranzen ausgleichen zu können. In diesem Fall kann die in der Figur 3 gezeigte Befestigungsanordnung 10' verwendet werden. Der umlaufende Vorsprung 21 in der Öffnung 16 fehlt bei diesem Ausführungsbeispiel. Außerdem ist der umlaufende Kragen 36 der Buchse 26 nicht an der ersten Stirnseite 38, sondern an der gegenüberliegenden zweiten Stirnseite 39 ausgebildet. Dadurch ist die Buchse 26 nur entlang einer Richtung axial festgelegt.

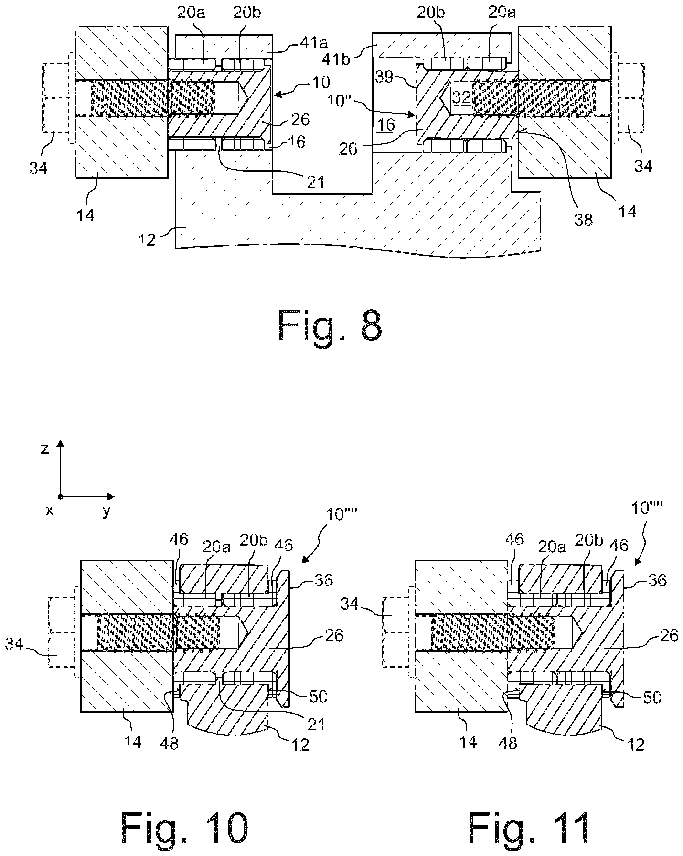

Weiter unten wird mit Bezug auf die Figur 8 ein Ausführungsbeispiel beschrieben, bei dem der Kragen sich wie in der Figur 2 an der ersten Stirnseite 38 befindet. Dadurch kann die gleiche Buchse 26 für beide Lagertypen verwendet werden.

Anstelle zweier einzelner Hülsen 20a, 20b kann bei diesem Ausführungsbeispiel natürlich auch eine einzige längere Hülse verwendet werden.

### 3. Weitere Varianten

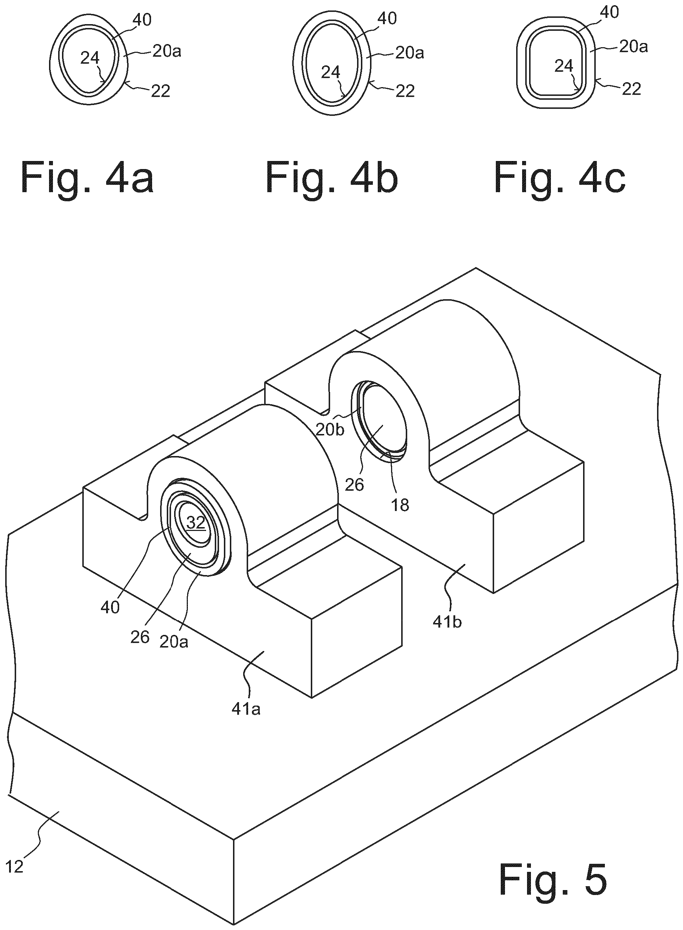

Die Figuren 4a, 4b und 4c zeigen unterschiedliche Varianten für die Hülse 20a in einer Draufsicht. Bei der innenliegenden Struktur handelt es sich um eine Fase 40, die an der Stirnseite der Hülse 20a ausgebildet ist. Bei dem in der Figur 4a gezeigten Ausführungsbeispiel ist die Außenkontur 22 und die Innenkontur 24jeweils eiförmig, die Innenkontur 24 ist jedoch gegenüber der Außenkontur 22 um 180° verdreht, so dass die Wandstärke der Hülse 20a über den Umfang variiert.

Bei der Figur 4b sind die Außenkontur 22 und die Innenkontur 24 oval und bei der Figur 4c abgerundet rechteckig; eine Verdrehung ist dort nicht vorgesehen, so dass die Wandstärke über den Umfang konstant ist.

Die Hülse 20b wird in aller Regel in gleicher Weise wie die Hülse 20a ausgebildet sein und sich allenfalls durch die axialen Abmessungen oder die Fase 40 unterscheiden.

Die Figur 5 zeigt das erste Bauteil 12 mit zwei daran angeformten Lagerblöcken 41a und 41b, an denen die Öffnungen 16 ausgebildet sind. In die Öffnung 16 des vorderen Lagerblocks 41a ist das Befestigungssystem 10 gemäß dem in den Figuren 1 und 2 gezeigten Ausführungsbeispiel eingesetzt, bei dem die Buchse 26 in beide Richtungen axial im Wesentlichen fixiert ist. Die vorspringende erste Hülse 20a und die darin eingefasste Buchse 26 sind gut zu erkennen. [

In den hinteren Lagerblock 41b ist das Befestigungssystem 10'gemäß dem zweiten Ausführungsbeispiel der Figur 3 eingesetzt, bei dem eine axiale Beweglichkeit der Buchse 26 im Bauteil 12 in der Art eines Loslagers realisiert ist. Die Schrauben 34 werden dabei von gegenüberliegenden Seiten (also beim ersten Lagerblock 41a in der Figur 5 von links und beim zweiten Lagerblock 41b von rechts) eingeschraubt; die Sackbohrung 32 in der Buchse 26 weist somit beim hinteren Lagerblock 41b ' vom Betrachter weg. Auf diese Weise können Toleranzen kompensiert werden, die sich in variierenden axialen Abständen zwischen den beiden Lagerblöcken 41, 41b niederschlagen.

### 4. Drittes Ausführungsbeispiel

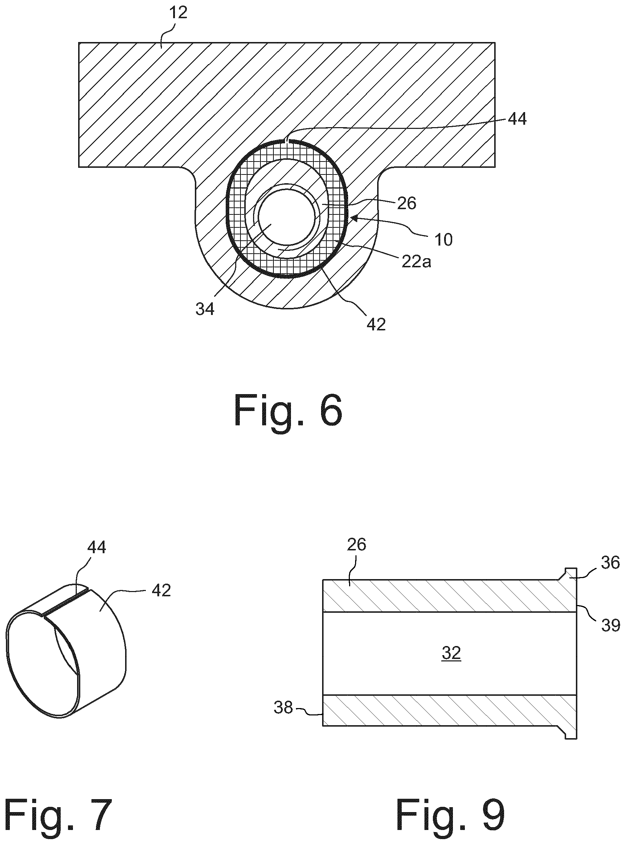

Die Figur 6 zeigt in einer in die Figur 1 angelehnten Darstellung ein Befestigungssystem 10 gemäß einem dritten Ausführungsbeispiel. Dort befindet sich zwischen dem ersten Bauteil 12 und den Hülsen 20a, 20b eine Schutzhülse 42, die in der Figur 7 perspektivisch dargestellt ist. Die Schutzhülse 42 verhindert einen direkten Kontakt zwischen dem Edelstahldraht der Hülsen 20a, 20b und dem umgebenden ersten Bauteil 12, der zu Kontakterosion führen kann. Die Schutzhülse 42 ist zu diesem Zweck passiviert und unterbricht auf diese Weise eine Wanderung von Ionen zwischen dem Drahtgestrick der Hülsen 20a, 20b und dem ersten Bauteil 12, wenn Feuchtigkeit in den Zwischenraum eindringt.

Um die Schutzhülse 42 besser in die Öffnung 16 einführen zu können, ist diese mit einem Längsschlitz 44 versehen.

Die Schutzhülse kann an eine oder beide Hülsen 20a, 20b z.B. mittels Laserschweißverfahren angeschweißt sein. Dadurch erhält man eine Baugruppe aus Schutzhülse 42 und Hülse(n) 20a, 20b, die mit weniger Arbeitsaufwand in die Öffnung 16 des ersten Bauteils 12 eingeführt werden kann.

### 5. Viertes Ausführungsbeispiel

Die Figur 8 zeigt in einem Längsschnitt ein Bauteil 12, an dem ähnlich wie in der Figur 5 zwei Lagerblöcke 41a, 41b ausgebildet sind. In die Öffnung 16 des links dargestellten Lagerblocks 41a ist das Befestigungssystem 10 gemäß dem ersten Ausführungsbeispiel (vgl. Figuren 1 und 2) eingesetzt, wodurch dort ein Festlager entsteht. In die hier durchgehende Öffnung 16 des rechts dargestellten Lagerblocks 41b ist ein Befestigungssystem 10" eingesetzt, wodurch dort ein Loslager entsteht. Das Befestigungssystem 10" unterscheidet sich von dem in der Figur 3 dargestellten Befestigungssystem 10' im Wesentlichen nur dadurch, dass die Sackbohrung 32 an der Stirnfläche 38 ausgebildet ist, die dem Kragen 36 gegenüberliegt. Dies ermöglicht es, für beide Lager die gleichen Buchsen 26 zu verwenden.

Bei dem in der Figur 8 gezeigten Ausführungsbeispiel ist die Bohrung 32 eine Sackbohrung. Die Figur 9 zeigt eine Variante, bei der die Bohrung 32 in der Buchse 26 eine Durchgangsgewindebohrung ist, wobei sich das Innengewinde (nicht dargestellt) über die gesamte Länge der Buchse 26 erstreckt. Dadurch kann die Schraube 34 von beiden Stirnflächen 38, 39 her in die Buchse 26 eingeschraubt werden. Dies wiederum ermöglicht es, die Buchse 26 auch in dem Befestigungssystem 10' der Figur 3 zu verwenden.

### 6. Fünftes Ausführungsbeispiel

Die Figur 10 zeigt in einem Längsschnitt ein Befestigungssystem 10ʺʺ, das zwei Bauteile 12, 14 in der Art eines Festlagers miteinander verbindet. Im Unterschied zu bei dem in den Figuren 1 und 2 sowie links in der Figur 8 gezeigten Ausführungsbeispielen sind die Hülsen 20a, 20b jeweils mit einem Flansch 46 versehen, der jeweils an einer der die Öffnung 16 umgebenden Stirnflächen 48, 50 des ersten Bauteils 12 in Anlage kommt. Der Flansch 46 der Hülse 20a befindet sich dabei zwischen dem ersten Bauteil 12 und dem zweiten Bauteil 14 und der Flansch 46 der Hülse 20b zwischen dem ersten Bauteil 12 und dem Kragen 36 der Buchse 26. Durch das Anziehen der Schraube 34 werden die Flansche 46 infolge der Klemmwirkung vorgespannt. Die Flansche 46 ermöglichen es, zwei Probleme zu lösen, die sich bei bestimmten Anwendungsfällen stellen können:
Gelegentlich wird verlangt, dass sich die elastischen Eigenschaften der Hülsen 20a, 20b in der xz-Ebene und in y-Richtung (siehe Koordinatenkreuz in Figur 10) unabhängig voneinander festlegen lassen. So könnte beispielsweise in der xz-Ebene eine weichere Lagerung als entlang der y-Richtung gewünscht sein. Die Abmessungen der Hülsen 20a, 20b bei dem in der Figur 8 gezeigten Ausführungsbeispiel können nur beschränkt variiert werden. Die Breite und Dicke der Flansche 46 hingegen ermöglichen es, die elastischen Eigenschaften der Hülsen 20a, 20b gezielt entlang der Y-Richtung zu beeinflussen.

Bei einigen Anwendungen können die Kräfte entlang der y-Richtung so groß sein, dass diese bei dem in der Figur 8 gezeigten Ausführungsbeispiel nicht allein über die kleine Kontaktfläche übertragen werden können, an der die Hülsen 20a, 20b an dem Vorsprung 21 anliegen. Die hohe Flächenpressung könnte im ungünstigsten Fall dazu führen, dass die Hülsen 20a, 20b in den Zwischenraum hineingedrückt werden, der in radialer Richtung zwischen dem Vorsprung 21 und der Buchse 26 verbleibt. Die Flansche 46 lösen dieses Problem dadurch, dass sie zusätzliche Kräfte entlang der y- Richtung aufnehmen und so die auftretende Flächenpressung verringern.

Wenn die Flansche 46 entlang der y-Richtung eine ausreichend hohe Steifigkeit haben, kann sogar auf den umlaufenden Vorsprung 21 verzichtet werden, der von der Innenseite der Öffnung 16 radial nach innen weist. Dies illustriert die Figur 11 in einer an die Figur 10 angelehnten Darstellung.

Flansche 46 können auch bei dem Befestigungssystem 10" vorgesehen sein, das sich in der Figur 8 im rechten Lagerblock 41b befindet (Loslager). Die Anordnung entspricht dann derjenigen im Befestigungssystem 10"" der Figur 11 mit dem Unterschied, dass die Buchse 46 länger ist, so dass der Flansch 46 der linken Hülse 20a nicht mehr beim Verschrauben vom zweiten Bauteil 14 verpresst wird, sondern frei bleibt. Dadurch verfügt die Buchse 26 entlang der y-Richtung über ein Spiel, das zum Ausgleich von Fertigungstoleranzen genutzt werden kann.

Um die Flächenpressung der Hülsen 20a, 20b gegen den Vorsprung 21 entlang der in y-Richtung zu verringern, kann auch die in der Figur 7 gezeigte Schutzhülse 42 verwendet werden. Dazu ist diese mit mindestens einem radial nach innen weisenden Kragen zu versehen, der zwischen einer der Hülsen 20a, 20b und dem Steg 21 liegt und eine etwas größere Kontaktfläche zu den Hülsen 20a, 20b hat als der Vorsprung 21.

## Patentansprüche

1. Baugruppe umfassend ein erstes Bauteil (12) und ein zweites Bauteil (14), an der das erste Bauteil (12) vibrationsgedämpft befestigt ist, mit folgenden Merkmalen:
a) das erste Bauteil (12) weist eine Öffnung (16) mit einer unrunden Innenkontur (18) auf;
b) in die Öffnung (16) ist eine verformbare und als Dämpfer wirkende Hülse (20a, 20b) eingesetzt, die
aus einem dreidimensionalen Gefüge aus Fäden, Fasern, Drähten oder anderen eindimensionalen Elementen oder aus einem gesinterten offenporigen Metallschaum besteht,
eine Außenkontur (22) hat, die der Innenkontur (18) der Öffnung (16) entspricht, und
eine unrunde Innenkontur (24) hat;
c) in die Hülse (20a, 20b) ist eine nicht verformbare Buchse (26) eingesetzt, die
eine Außenkontur (28) hat, die der Innenkontur (24) der Hülse (20a, 20b) entspricht, und
eine mit einem Innengewinde (30) versehene Bohrung (32) zur Aufnahme einer Schraube (34) hat, mittels derer das zweite Bauteil (14) mit dem ersten Bauteil (12) verbindbar ist.

2. Baugruppe nach Anspruch 1, bei der die Innenkontur (24) der Hülse geometrisch ähnlich zur Außenkontur (22) der Hülse (20a, 20b) ist.

3. Baugruppe nach Anspruch 1 oder 2, bei der die Hülse (20a, 20b) eine Wandstärke (d) hat, die über den Umfang der Hülse (20a, 20b) variiert.

4. Baugruppe nach einem der vorhergehenden Ansprüche, bei der zur Erzielung einer Übergangs- oder Presspassung die Außenkontur (22) der Hülse (20a, 20b) größer ist als die Innenkontur (18) der Öffnung (16).

5. Baugruppe nach einem der vorhergehenden Ansprüche, bei der zur Erzielung einer Übergangs- oder Presspassung die Außenkontur (28) der Buchse (26) größer ist als die Innenkontur (24) der Hülse (20a, 20b).

6. Baugruppe nach einem der vorhergehenden Ansprüche, bei der eine Längsachse der Bohrung (32) parallel versetzt zu einer Längsachse der Hülse (20a, 20b) verläuft.

7. Baugruppe nach einem der vorhergehenden Ansprüche, bei der die Buchse (26) stirnseitig einen umlaufenden Kragen (36) aufweist, der an der Hülse (20a, 20b) anliegt und die axiale Lage der Buchse (26) in der Hülse (20a, 20b) festlegt.

8. Baugruppe nach Anspruch 7, bei der die Öffnung (16) eine Durchgangsöffnung ist und einen nach innen ragenden Vorsprung (21) aufweist, und wobei die Hülse (20b) zwischen dem Vorsprung (21) und dem Kragen (36) angeordnet ist, so dass die Buchse (26) nach Anziehen der Schraube (34) axial festlegt ist.

9. Baugruppe nach Anspruch 7 oder 8, bei welcher der Kragen (36) sich auf einer Stirnseite (38) der Buchse (26) befindet, die gegenüber der Stirnseite (39) ist, von der aus die Schraube (34) in die Bohrung (32) eingeschraubt wird.

10. Baugruppe nach einem der vorhergehenden Ansprüche, bei der die Hülse (20a, 20b) einen flanschartigen Ansatz (46) hat, der an einer die Öffnung (16) umgebende Stirnfläche (48, 50) des ersten Bauteils (12) in Anlage kommt.

11. Baugruppe nach einem der vorhergehenden Ansprüche, bei welcher die Hülse (20a, 20b) aus einem Welldraht besteht, dessen Dichte entlang der Längsrichtung variiert.

12. Baugruppe nach einem der vorhergehenden Ansprüche, bei der das Gefüge und das erste Bauteil (12) aus unterschiedlichen Metallen besteht und zur Vermeidung von Kontakterosion zwischen den Metallen eine Schutzhülse (42) aus einem passivierten Metall zwischen der Hülse (20a, 20b) und dem ersten Bauteil (12) angeordnet ist.

13. Baugruppe nach Anspruch 12 bei Rückbezug auf den Anspruch 8, bei der die Schutzhülse (42) einen radial nach innen weisenden Kragen hat, der zwischen der Hülse (20a, 20b) und dem nach innen ragenden Vorsprung (21) liegt und eine größere Kontaktfläche zu der Hülse (20a, 20b) hat als der Vorsprung (21).

14. Befestigungssystem (10) zur vibrationsgedämpften Verbindung eines ersten Bauteils (12) und eines zweiten Bauteils (14), umfassend:
a) eine verformbare und als Dämpfer wirkende Hülse (20a, 209b), die
aus einem dreidimensionalen Gefüge aus Fäden, Fasern, Drähten oder anderen eindimensionalen Elementen oder aus einem gesinterten offenporigen Metallschaum besteht,
eine unrunde Außenkontur (22) und eine unrunde Innenkontur (24) hat und formschlüssig in eine Öffnung (16) mit unrunder Innenkontur (18) einschiebbar ist, die in dem ersten Bauteil (12) vorgesehen ist;
b) eine nicht verformbare Buchse (26), die
eine Außenkontur (28) hat, die der Innenkontur (24) der Hülse (20a, 20b) entspricht, so dass die Buchse (26) in die Hülse (20a, 20b) einschiebbar ist, und
eine mit einem Innengewinde (30) versehene Bohrung (32) zur Aufnahme einer Schraube (34) hat, mittels derer das zweite Bauteil (14) mit dem ersten Bauteil (12) verbindbar ist.

15. Befestigungssystem (10) mit den Merkmalen eines der Ansprüche 2 bis 13.
